# EUROPEAN PATENT APPLICATION

(11) **EP 4 163 990 A1**
(43) Date of publication of application: **12.04.2023**
(21) Application number: 21822973.0
(22) Date of filing: 31.03.2021
(51) Int. Cl.: H01M 4/13, H01M 4/62, H01M 10/052, H01M 10/0562, H01B 1/06, H01B 1/08

(54) **SOLID ELECTROLYTE MATERIAL, AND BATTERY IN WHICH SAME IS USED**

(30) Priority: 08.06.2020 JP 2020099497
(71) Applicant: Panasonic Intellectual Property Management Co., Ltd., Osaka-shi, Osaka 540-6207 (JP)
(72) Inventor: TANAKA, Yoshiaki, Osaka 540-6207 (JP); TAKEUCHI, Kaori, Osaka 540-6207 (JP); ASANO, Tetsuya, Osaka 540-6207 (JP); SAKAI, Akihiro, Osaka 540-6207 (JP)
(74) Representative: Eisenführ Speiser
(86) International application number: PCT/JP2021/014089
(87) International publication number: WO 2021/250985

(57) **Abstract**

A solid electrolyte material of the present disclosure includes Li, M, O, and X. The M is at least one selected from the group consisting of Ti, Zr, and Hf. The X is at least one selected from the group consisting of Cl, Br, and I. A molar ratio of the Li to the M is 1.0 or more and 3.0 or less. A molar ratio of the O to the X is 0.10 or more and 0.50 or less.

## Description

### TECHNICAL FIELD

The present disclosure relates to a solid electrolyte material and a battery in which the same is used.

### BACKGROUND ART

Patent Literature 1 discloses an all-solid-state battery in which a sulfide solid electrolyte material is used.

Patent Literature 2 discloses a solid electrolyte material represented by Li₆₋₄ₐMₐX₆, where M is at least one selected from the group consisting of Zr, Hf, and Ti, X is a halogen element, and a mathematical relation 0 < a < 1.5 is satisfied.

### CITATION LIST

### Patent Literature

Patent Literature 1: JP 2011-129312 A
Patent Literature 2: WO 2020/070955 A1

### SUMMARY OF INVENTION

### Technical Problem

The present disclosure aims to enhance the lithium-ion conductivity of a solid electrolyte material including halogen.

### Solution to Problem

A solid electrolyte material of the present disclosure includes:
Li;
M;
O; and
X, wherein
the M is at least one selected from the group consisting of Ti, Zr, and Hf,
the X is at least one selected from the group consisting of Cl, Br, and I,
a molar ratio of the Li to the M is 1.0 or more and 3.0 or less, and
a molar ratio of the O to the X is 0.10 or more and 0.50 or less.

### Advantageous Effects of Invention

According to the present disclosure, it is possible to enhance the lithium-ion conductivity of a solid electrolyte material including halogen.

### BRIEF DESCRIPTION OF DRAWINGS

FIG. 1 shows a cross-sectional view of a battery 1000 according to a second embodiment.
FIG. 2 shows a cross-sectional view of an electrode material 1100 according to the second embodiment.
FIG. 3 shows a schematic diagram of a pressure-molding die 300 used to evaluate the ionic conductivity of a solid electrolyte material.
FIG. 4 is a graph showing the temperature dependence of the ionic conductivity of a solid electrolyte material according to Example 1.
FIG. 5 is a graph showing the X-ray diffraction patterns of solid electrolyte materials according to Examples 1 to 7 and Comparative Example 1.
FIG. 6 is a graph showing the initial discharge characteristics of a battery according to Example 1.

### DESCRIPTION OF EMBODIMENTS

Embodiments of the present disclosure will be described below with reference to the drawings. The present disclosure is not limited to the following embodiments.

### (First embodiment)

A solid electrolyte material according to a first embodiment includes Li, M, O, and X. M is at least one selected from the group consisting of Ti, Zr, and Hf. X is at least one selected from the group consisting of Cl, Br, and I. The molar ratio of Li to M is 1.0 or more and 3.0 or less. The molar ratio of O to X is 0.10 or more and 0.50 or less.

The molar ratio of Li to M being 1.0 or more and 3.0 or less optimizes the concentration of Li serving as the conduction carrier. The molar ratio of O to X being 0.10 or more and 0.50 facilitates formation of a path for diffusion of lithium ions. As a result, the lithium-ion conductivity of the solid electrolyte material is enhanced.

To increase the ionic conductivity of the solid electrolyte material, the molar ratio of O to X may be 0.20 or more and 0.30 or less. To further increase the ionic conductivity of the solid electrolyte material, the molar ratio of O to X may be 0.24 or more and 0.26 or less.

The molar ratio of Li to M is calculated from a mathematical expression (the amount of substance of Li)/(the total of the amounts of substance of Ti, Zr, and Hf). The molar ratio of O to X is calculated from a mathematical expression (the amount of substance of O)/(the total of the amounts of substance of Cl, Br, and I). Hereinafter, the molar ratio of Li to M is also denoted as "Li/M". The molar ratio of O to X is also denoted as "O/X".

The solid electrolyte material according to the first embodiment can be used to achieve a battery having excellent charge and discharge characteristics. The battery is, for example, an all-solid-state battery. The all-solid-state battery may be a primary battery or a secondary battery.

The solid electrolyte material according to the first embodiment has an ionic conductivity of, for example, 0.7 mS/cm or more.

The solid electrolyte material according to the first embodiment can maintain a high lithium-ion conductivity within an expected operating temperature range of batteries (e.g., a range from -30°C to 80°C). Accordingly, a battery in which the solid electrolyte material according to the first embodiment is used can stably operate even in an environment with temperature variations.

From the viewpoint of safety, it is desirable that the solid electrolyte material according to the first embodiment should be free of sulfur. Solid electrolyte materials free of sulfur generate no hydrogen sulfide when exposed to the atmosphere, and accordingly are excellent in safety. Note that the sulfide solid electrolyte material disclosed in Patent Literature 1 can generate hydrogen sulfide when exposed to the atmosphere.

To increase the ionic conductivity of the solid electrolyte material, the solid electrolyte material according to the first embodiment may consist essentially of Li, M, O, and X. Here, the phrase "the solid electrolyte material according to the first embodiment consists essentially of Li, M, O, and X" means that the molar ratio of the sum of the amounts of substance of Li, M, O, and X to the total of the amounts of substance of all the elements constituting the solid electrolyte material according to the first embodiment is 90% or more. In an example, the molar ratio may be 95% or more.

To increase the ionic conductivity of the solid electrolyte material, the solid electrolyte material according to the first embodiment may consist of Li, M, O, and X.

To increase the ionic conductivity of the solid electrolyte material, M in the solid electrolyte material according to the first embodiment may include Zr. Desirably, M may be Zr.

To increase the ionic conductivity of the solid electrolyte material, X in the solid electrolyte material according to the first embodiment may include Cl. Desirably, X may be Cl.

The solid electrolyte material according to the first embodiment may include a crystalline phase. The crystalline phase is attributed to, for example, LiX or Li₆₋₄ₐMₐX₆ (the mathematical relation 0 < a < 1.5 is satisfied). The solid electrolyte material may include both or only one of an amorphous phase and a crystalline phase. The solid electrolyte material may include, as the crystalline phase, only a crystalline phase having a composition represented by LiX or Li₆₋₄ₐMₐX₆ (the mathematical relation 0 < a < 1.5 is satisfied). The microstructure of the solid electrolyte material can be examined by X-ray diffraction measurement.

The X-ray diffraction pattern of the solid electrolyte material according to the first embodiment can be obtained by X-ray diffraction measurement according to the θ-2θ method using Cu-Kα radiation (wavelengths of 1.5405 Å and 1.5444 Å, i.e., wavelengths of 0.15405 nm and 0.15444 nm).

The diffraction angle of a peak in the X-ray diffraction pattern is defined as an angle at which the maximum intensity is exhibited for a projection portion having a full width at half maximum of 10° or less at a ratio SN (i.e., a ratio of a signal S to a background noise N) of 1.5 or more. The full width at half maximum refers to the width defined by the difference between two diffraction angles at which the intensity is half of I_{MAX} where I_{MAX} is the maximum intensity of the X-ray diffraction peak.

The shape of the solid electrolyte material according to the first embodiment is not limited. The shape is, for example, acicular, spherical, or ellipsoidal. The solid electrolyte material according to the first embodiment may be in particle form. The solid electrolyte material according to the first embodiment may be formed to have a pellet shape or a plate shape.

In the case where the shape of the solid electrolyte material according to the first embodiment is particulate (e.g., spherical), the solid electrolyte material may have a median diameter of 0.1 µm or more and 100 µm or less, or may have a median diameter of 0.5 µm or more and 10 µm or less. In this case, the solid electrolyte material according to the first embodiment and other materials can be favorably dispersed. The median diameter of particle means the particle diameter (d50) at a cumulative volume equal to 50% in the volumetric particle size distribution. The volumetric particle size distribution can be measured with a laser diffraction measurement device or an image analysis device.

In the case where the shape of the solid electrolyte material according to the first embodiment is particulate (e.g., spherical), the solid electrolyte material may have a smaller median diameter than the active material. In this case, the solid electrolyte material and the active material according to the first embodiment can form a favorable dispersion state.

### <Method of manufacturing solid electrolyte material>

The solid electrolyte material according to the first embodiment can be manufactured by the following method.

Raw material powders are prepared such that a target composition is achieved. Examples of the raw material powders include those of an oxide, a hydroxide, a halide, and an acid halide.

In an example, assume a case where a solid electrolyte material is formed of Li, Zr, O, and Cl, M is Zr, X is Cl, the molar ratio Li/M in mixing the raw materials is 1.0, and the molar ratio O/X in mixing the raw materials is 0.5. In this case, Li₂O₂ and ZrCl₄ are mixed in the molar ratio of Li₂O₂: ZrCl₄ = 1: 1. M and X are determined by selecting the raw material powders. The molar ratios Li/M and O/X are determined by selecting the mixing ratio between the raw material powders.

The mixture of the raw material powders is fired to obtain a reaction product. To suppress evaporation of the raw materials due to firing, firing may be performed by sealing the mixture of the raw material powders in an airtight container formed of quartz glass or borosilicate glass in a vacuum or an inert gas atmosphere. The inert atmosphere is, for example, an argon atmosphere or a nitrogen atmosphere. Alternatively, the mixture of the raw material powders may be reacted with each other mechanochemically (by a mechanochemical milling method) in a mixer such as a planetary ball mill to obtain a reaction product. By these methods, the solid electrolyte material according to the first embodiment is obtained.

In firing the mixture of the raw material powders, a portion of O evaporates from the raw material powders in some cases. As a result, the molar ratio O/X in the solid electrolyte material can be smaller than the molar ratio O/X calculated from the molar ratio between the raw material powders.

The composition of the solid electrolyte material is determined, for example, by a high-frequency inductively coupled plasma (ICP) emission spectroscopy, ion chromatography, or an inert gas fusion-infrared absorption method.

### (Second embodiment)

A second embodiment will be described below. The matters described in the first embodiment will be omitted as appropriate.

A battery according to the second embodiment includes a positive electrode, an electrolyte layer, and a negative electrode. The electrolyte layer is disposed between the positive electrode and the negative electrode. At least one selected from the group consisting of the positive electrode, the electrolyte layer, and the negative electrode includes the solid electrolyte material according to the first embodiment.

The battery according to the second embodiment has excellent charge and discharge characteristics.

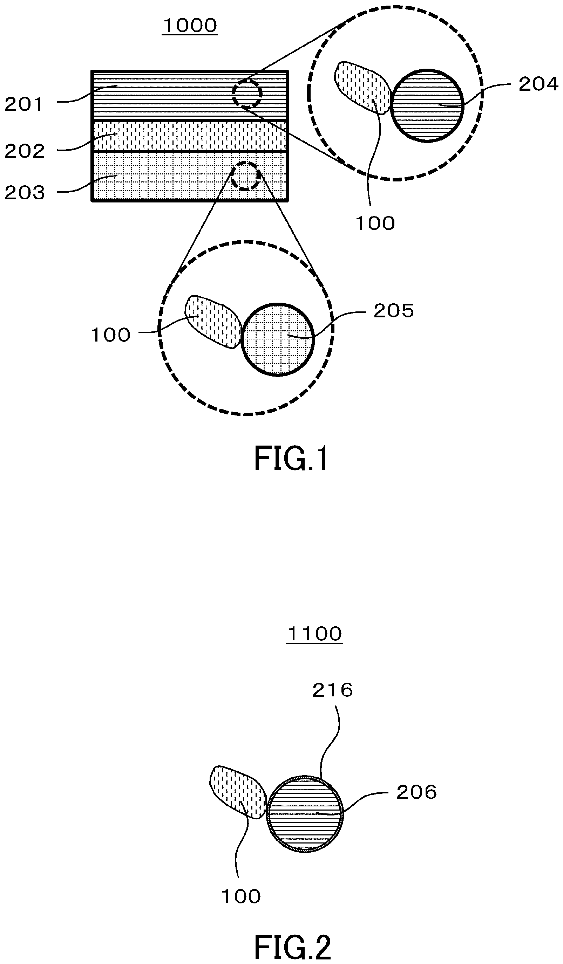

FIG. 1 shows a cross-sectional view of a battery 1000 according to the second embodiment.

The battery 1000 includes a positive electrode 201, an electrolyte layer 202, and a negative electrode 203. The electrolyte layer 202 is disposed between the positive electrode 201 and the negative electrode 203.

The positive electrode 201 includes positive electrode active material particles 204 and solid electrolyte particles 100.

The electrolyte layer 202 includes an electrolyte material. The electrolyte material is, for example, a solid electrolyte material.

The negative electrode 203 includes negative electrode active material particles 205 and the solid electrolyte particles 100.

The solid electrolyte particles 100 are particles including the solid electrolyte material according to the first embodiment. The solid electrolyte particles 100 may be particles including the solid electrolyte material according to the first embodiment as a main component. The particles including the solid electrolyte material according to the first embodiment as a main component refer to particles in which the component contained in the largest amount is the solid electrolyte material according to the first embodiment. The solid electrolyte particles 100 may be particles consisting of the solid electrolyte material according to the first embodiment.

The positive electrode 201 includes a material capable of occluding and releasing metal ions such as lithium ions. The positive electrode 201 includes, for example, a positive electrode active material (e.g., the positive electrode active material particles 204).

Examples of the positive electrode active material include a lithium-containing transition metal oxide, a transition metal fluoride, a polyanion material, a fluorinated polyanion material, a transition metal sulfide, a transition metal oxysulfide, and a transition metal oxynitride. Examples of the lithium-containing transition metal oxide include Li(Ni, Co, Al)O₂, Li(Ni, Co, Mn)O₂, and LiCoO₂.

In the present disclosure, "(A, B, C)" denotes "at least one selected from the group consisting of A, B, and C".

From the viewpoint of cost and safety of the battery, lithium phosphate may be used as the positive electrode active material.

In the case where the positive electrode 201 includes a solid electrolyte material according to the first embodiment in which X includes I (i.e., iodine), lithium iron phosphate may be used as the positive electrode active material. The solid electrolyte material according to the first embodiment that includes I is susceptible to oxidation. Using lithium iron phosphate as the positive electrode active material suppresses an oxidation reaction of the solid electrolyte material. That is, formation of an oxide layer having a low lithium-ion conductivity is suppressed. As a result, the battery has a high charge and discharge efficiency.

The positive electrode 201 may include, in addition to the solid electrolyte material according to the first embodiment, a transition metal oxyfluoride as the positive electrode active material. The solid electrolyte material according to the first embodiment is not susceptible to formation of a resistance layer even when the solid electrolyte material is fluorinated by the transition metal fluoride. As a result, the battery has a high charge and discharge efficiency.

The transition metal oxyfluoride contains oxygen and fluorine. In an example, the transition metal oxyfluoride may be a compound represented by a composition formula LiₚMe_{q}OₘFₙ. Here, Me is at least one element selected from the group consisting of Mn, Co, Ni, Fe, Al, Cu, V, Nb, Mo, Ti, Cr, Zr, Zn, Na, K, Ca, Mg, Pt, Au, Ag, Ru, W, B, Si, and P, and the following mathematical relations are satisfied: 0.5 ≤ p ≤ 1.5; 0.5 ≤ q ≤ 1.0; 1 ≤ m < 2; and 0 < n ≤ 1. Examples of such a transition metal oxyfluoride include Li_{1.05}(Ni_{0.35}Co_{0.35}Mn_{0.3})_{0.95}O_{1.9}F_{0.1}.

The positive electrode active material particles 204 may have a median diameter of 0.1 µm or more and 100 µm or less. In the case where the positive electrode active material particles 204 have a median diameter of 0.1 µm or more, the positive electrode active material particles 204 and the solid electrolyte particles 100 can form a favorable dispersion state in the positive electrode 201. This enhances the charge and discharge characteristics of the battery. In the case where the positive electrode active material particles 204 have a median diameter of 100 µm or less, the diffusion rate of lithium in the positive electrode active material particles 204 is enhanced. This enables the battery to operate at a high output.

The positive electrode active material particles 204 may have a larger median diameter than the solid electrolyte particles 100. In this case, the positive electrode active material particles 204 and the solid electrolyte particles 100 can form a favorable dispersion state.

To increase the energy density and the output of the battery, the ratio of the volume of the positive electrode active material particles 204 to the sum of the volume of the positive electrode active material particles 204 and the volume of the solid electrolyte particles 100 in the positive electrode 201 may be 0.30 or more and 0.95 or less.

FIG. 2 shows a cross-sectional view of an electrode material 1100 according to the second embodiment. The electrode material 1100 is included, for example, in the positive electrode 201. To prevent electrode active material particles 206 from reacting with the solid electrolyte particles 100, a coating layer 216 may be formed on the surface of each of the electrode active material particles 206. In this case, an increase in reaction overvoltage of the battery can be suppressed. Examples of a coating material included in the coating layer 216 include a sulfide solid electrolyte, an oxide solid electrolyte, and a halide solid electrolyte.

In the case where the solid electrolyte particles 100 are those of a sulfide solid electrolyte, the coating material may be the solid electrolyte material according to the first embodiment. The solid electrolyte material according to the first embodiment is less susceptible to oxidation than the sulfide solid electrolyte. Accordingly, an increase in reaction overvoltage of the battery can be suppressed.

In the case where the solid electrolyte particles 100 are those of a solid electrolyte material according to the first embodiment in which X includes I, the coating material may be a solid electrolyte material according to the first embodiment in which X is at least one element selected from the group consisting of Cl and Br. A solid electrolyte material according to the first embodiment that does not include I is less susceptible to oxidation than a solid electrolyte material according to the first embodiment that includes I. As a result, the battery has a high charge and discharge efficiency.

In the case where the solid electrolyte particles 100 are those of the solid electrolyte material according to the first embodiment in which X includes I, the coating material may include an oxide solid electrolyte. The oxide solid electrolyte may be lithium niobate, which exhibits an excellent stability even at a high potential. In this case, the battery has a high charge and discharge efficiency.

The positive electrode 201 may consist of a first positive electrode layer including a first positive electrode active material and a second positive electrode layer including a second positive electrode active material. Here, the second positive electrode layer is disposed between the first positive electrode layer and the electrolyte layer 202, the first positive electrode layer and the second positive electrode layer include a solid electrolyte material according to the first embodiment that includes I, and the coating layer 216 is formed on the surface of the second positive electrode active material. According to the above configuration, it is possible to suppress oxidation of the solid electrolyte material according to the first embodiment included in the electrolyte layer 202 caused by the second positive electrode active material. As a result, the battery has a high charge capacity. Examples of the coating material included in the coating layer 216 include a sulfide solid electrolyte, an oxide solid electrolyte, a solid polymer electrolyte, and a halide solid electrolyte. Note that in the case where the coating material is a halide solid electrolyte, the coating material does not include I as a halogen element. The first positive electrode active material may be the same material as that of the second positive electrode active material, or may be a different material from that of the second positive electrode active material.

To increase the energy density and the output of the battery, the positive electrode 201 may have a thickness of 10 µm or more and 500 µm or less.

The electrolyte layer 202 includes an electrolyte material. The electrolyte material is, for example, a solid electrolyte material. The electrolyte layer 202 may be a solid electrolyte layer. The solid electrolyte material included in the electrolyte layer 202 may include the solid electrolyte material according to the first embodiment. The solid electrolyte material included in the electrolyte layer 202 may consist of the solid electrolyte material according to the first embodiment.

The solid electrolyte material included in the electrolyte layer 202 may consist of a solid electrolyte material different from the solid electrolyte material according to the first embodiment. Examples of the solid electrolyte material different from the solid electrolyte material according to the first embodiment include Li₂MgX'₄, Li₂FeX'₄, Li(Al, Ga, In)X'₄, Li₃(Al, Ga, In)X's, and Lil. Here, X' is at least one element selected from the group consisting of F, Cl, Br, and I.

Hereinafter, the solid electrolyte material according to the first embodiment is referred to as a first solid electrolyte material. The solid electrolyte material different from the solid electrolyte material according to the first embodiment is referred to as a second solid electrolyte material.

The electrolyte layer 202 may include the first solid electrolyte material, and in addition, the second solid electrolyte material. The first solid electrolyte material and the second solid electrolyte material may be uniformly dispersed.

The electrolyte layer 202 may have a thickness of 1 µm or more and 100 µm or less. In the case where the electrolyte layer 202 has a thickness of 1 µm or more, a short-circuit between the positive electrode 201 and the negative electrode 203 tends not to occur. In the case where the electrolyte layer 202 has a thickness of 100 µm or less, the battery can operate at a high output.

Another electrolyte layer (i.e., a second electrolyte layer) may be further provided between the electrolyte layer 202 and the negative electrode 203. For example, in the case where the electrolyte layer 202 includes the first solid electrolyte material, the second electrolyte layer may be formed of another solid electrolyte material that is electrochemically more stable than the first solid electrolyte material. Specifically, the reduction potential of the solid electrolyte material forming the second electrolyte layer may be lower than that of the first solid electrolyte material. In this case, the first solid electrolyte material can be used without being reduced. As a result, the charge and discharge efficiency of the battery can be enhanced.

The negative electrode 203 includes a material capable of occluding and releasing metal ions (e.g., lithium ions). The negative electrode 203 includes, for example, a negative electrode active material (e.g., the negative electrode active material particles 205).

Examples of the negative electrode active material include a metal material, a carbon material, an oxide, a nitride, a tin compound, and a silicon compound. The metal material may be a metal simple substance or an alloy. Examples of the metal material include lithium metal and a lithium alloy. Examples of the carbon material include natural graphite, coke, partially graphitized carbon, a carbon fiber, spherical carbon, artificial graphite, and amorphous carbon. From the viewpoint of capacity density, preferred examples of the negative electrode active material include silicon (i.e., Si), tin (i.e., Sn), a silicon compound, and a tin compound.

The negative electrode active material may be selected based on the reduction resistance of the solid electrolyte material included in the negative electrode 203. In the case where the negative electrode 203 includes the first solid electrolyte material, the negative electrode active material to be used may be a material capable of occluding and releasing lithium ions at 1.6 V or more versus lithium. Using such a material as the negative electrode active material can suppress reduction of the first solid electrolyte material included in the negative electrode 203. As a result, the battery has a high charge and discharge efficiency. Examples of the material include a titanium oxide, an indium metal, and a lithium alloy. Examples of the titanium oxide include Li₄Ti₅O₁₂, LiTi₂O₄, and TO₂.

The negative electrode active material particles 205 may have a median diameter of 0.1 µm or more and 100 µm or less. In the case where the negative electrode active material particles 205 have a median diameter of 0.1 µm or more, the negative electrode active material particles 205 and the solid electrolyte particles 100 can form a favorable dispersion state in the negative electrode 203. This enhances the charge and discharge characteristics of the battery. In the case where the negative electrode active material particles 205 have a median diameter of 100 µm or less, the diffusion rate of lithium in the negative electrode active material particles 205 is enhanced. This enables the battery to operate at a high output.

The negative electrode active material particles 205 may have a larger median diameter than the solid electrolyte particles 100. In this case, the negative electrode active material particles 205 and the solid electrolyte particles 100 can form a favorable dispersion state.

To increase the energy density and the output of the battery, the ratio of the volume of the negative electrode active material particles 205 to the sum of the volume of the negative electrode active material particles 205 and the volume of the solid electrolyte particles 100 in the negative electrode 203 may be 0.30 or more and 0.95 or less.

The electrode material 1100 shown in FIG. 2 may be included in the negative electrode 203. To prevent the negative electrode active material (i.e., the electrode active material particles 206) from reacting with the solid electrolyte particles 100, the coating layer 216 may be formed on the surface of each of the electrode active material particles 206. In this case, the battery has a high charge and discharge efficiency. Examples of the coating material included in the coating layer 216 include a sulfide solid electrolyte, an oxide solid electrolyte, a solid polymer electrolyte, and a halide solid electrolyte.

In the case where the solid electrolyte particles 100 are those of the first solid electrolyte material, the coating material may be a sulfide solid electrolyte, an oxide solid electrolyte, or a solid polymer electrolyte. Examples of the sulfide solid electrolyte include Li₂S-P₂S₅. Examples of the oxide solid electrolyte include trilithium phosphate. Examples of the solid polymer electrolyte include a complex compound of polyethylene oxide and a lithium salt. Examples of such a solid polymer electrolyte include lithium bis(trifluoromethanesulfonyl)imide.

To increase the energy density and the output of the battery, the negative electrode 203 may have a thickness of 10 µm or more and 500 µm or less.

To increase the ionic conductivity, at least one selected from the positive electrode 201, the electrolyte layer 202, and the negative electrode 203 may include the second solid electrolyte material. Examples of the second solid electrolyte material include a sulfide solid electrolyte, an oxide solid electrolyte, a halide solid electrolyte, and a solid organic polymer electrolyte.

In the present disclosure, the term "sulfide solid electrolyte" refers to a solid electrolyte containing sulfur. The term "oxide solid electrolyte" refers to a solid electrolyte containing oxygen. The oxide solid electrolyte may contain anions (excluding sulfur anions and halogen anions) in addition to oxygen. The term "halide solid electrolyte" refers to a solid electrolyte containing a halogen element and being free of sulfur. The halide solid electrolyte may contain oxygen in addition to a halogen element.

Examples of the sulfide solid electrolyte include Li₂S-P₂S₅, Li₂S-SiS₂, Li₂S-B₂S₃, Li₂S-GeS₂, Li_{3.25}Ge_{0.25}P_{0.75}S₄, and Li₁₀GeP₂S₁₂.

Examples of the oxide solid electrolyte include:
(i) a NASICON solid electrolyte such as LiTi₂(PO₄)₃ and element-substituted substances thereof;
(ii) a perovskite solid electrolyte such as (LaLi)TiOs;
(iii) a LISICON solid electrolyte such as Li₁₄ZnGe₄O₁₆, Li₄SiO₄, and LiGeO₄ and element-substituted substances thereof;
(iv) a garnet solid electrolyte such as Li₇La₃Zr₂O₁₂ and element-substituted substances thereof; and
(v) Li₃PO₄ and N-substituted substances thereof.

Examples of the halide solid electrolyte include a compound represented by LiₐMe'_{b}Y_{c}Z₆. Here, mathematical relations a + mb + 3c = 6 and c > 0 are satisfied. Me' is at least one selected from the group consisting of a metalloid element and a metal element other than Li and Y Z is at least one element selected from the group consisting of F, Cl, Br, and I. The value m represents the valence of Me'.

The "metalloid elements" are B, Si, Ge, As, Sb, and Te. The "metal elements" are: all the elements included in Groups 1 to 12 of the periodic table (excluding hydrogen); and all the elements included in Groups 13 to 16 of the periodic table (excluding B, Si, Ge, As, Sb, Te, C, N, P, O, S, and Se).

To increase the ionic conductivity of the halide solid electrolyte, Me' may be at least one element selected from the group consisting of Mg, Ca, Sr, Ba, Zn, Sc, Al, Ga, Bi, Zr, Hf, Ti, Sn, Ta, and Nb.

Examples of the halide solid electrolyte include Li₃YCl₆ and LisYBre.

In the case where the electrolyte layer 202 includes the first solid electrolyte material, the negative electrode 203 may include a sulfide solid electrolyte. In this case, the sulfide solid electrolyte, which is electrochemically stable with respect to the negative electrode active material, suppresses a contact between the first solid electrolyte material and the negative electrode active material. As a result, the battery has a low internal resistance.

Examples of the solid organic polymer electrolyte include a compound of a polymer compound and a lithium salt. The polymer compound may have an ethylene oxide structure. The polymer compound having the ethylene oxide structure can contain a large amount of the lithium salt, and accordingly has a higher ionic conductivity.

Examples of the lithium salt include LiPF₆, LiBF₄, LiSbF₆, LiAsF₆, LiSOsCFs, LiN(SO₂CF₃)₂, LiN(SO₂C₂F₅)₂, LiN(SO₂CF₃)(SO₂C₄F₉), and LiC(SO₂CF₃)₃. One lithium salt selected from these may be used alone. Alternatively, a mixture of two or more lithium salts selected from these may be used.

To facilitate transfer of lithium ions and thereby enhance the output characteristics of the battery, at least one selected from the group consisting of the positive electrode 201, the electrolyte layer 202, and the negative electrode 203 may include a nonaqueous electrolyte solution, a gel electrolyte, or an ionic liquid.

The nonaqueous electrolyte solution contains a nonaqueous solvent and a lithium salt dissolved in the nonaqueous solvent. Examples of the nonaqueous solvent include a cyclic carbonate solvent, a linear carbonate solvent, a cyclic ether solvent, a linear ether solvent, a cyclic ester solvent, a linear ester solvent, and a fluorinated solvent.
Examples of the cyclic carbonate solvent include ethylene carbonate, propylene carbonate, and butylene carbonate. Examples of the linear carbonate solvent include dimethyl carbonate, ethyl methyl carbonate, and diethyl carbonate. Examples of the cyclic ether solvent include tetrahydrofuran, 1,4-dioxane, and 1,3-dioxolane. Examples of the linear ether solvent include 1,2-dimethoxyethane and 1,2-diethoxyethane. Examples of the cyclic ester solvent include γ-butyrolactone. Examples of the linear ester solvent include methyl acetate. Examples of the fluorinated solvent include fluoroethylene carbonate, methyl fluoropropionate, fluorobenzene, fluoroethyl methyl carbonate, and fluorodimethylene carbonate. One nonaqueous solvent selected from these may be used alone. Alternatively, a mixture of two or more nonaqueous solvents selected from these may be used.

Examples of the lithium salt include LiPF₆, LiBF₄, LiSbF₆, LiAsF₆, LiSOsCFs, LiN(SO₂CF₃)₂, LiN(SO₂C₂F₅)₂, LiN(SO₂CF₃)(SO₂C₄F₉), and LiC(SO₂CF₃)₃. One lithium salt selected from these may be used alone. Alternatively, a mixture of two or more lithium salts selected from these may be used. The concentration of the lithium salt falls within a range, for example, from 0.5 mol/L to 2 mol/L.

The gel electrolyte can be a polymeric material impregnated with a nonaqueous electrolyte solution. Examples of the polymeric material include polyethylene oxide, polyacrylonitrile, polyvinylidene fluoride, polymethyl methacrylate, and a polymer having an ethylene oxide bond.

Examples of cations contained in the ionic liquid include:
(i) aliphatic linear quaternary salts such as tetraalkylammonium and tetraalkylphosphonium;
(ii) aliphatic cyclic ammoniums such as pyrrolidiniums, morpholiniums, imidazoliniums, tetrahydropyrimidiniums, piperaziniums, and piperidiniums; and
(iii) nitrogen-containing heterocyclic aromatic cations such as pyridiniums and imidazoliums.

Examples of anions contained in the ionic liquid include PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻, and C(SO₂CF₃)₃⁻.

The ionic liquid may contain a lithium salt.

To enhance the adhesion between particles, at least one selected from the group consisting of the positive electrode 201, the electrolyte layer 202, and the negative electrode 203 may contain a binder.

Examples of the binder include polyvinylidene fluoride, polytetrafluoroethylene, polyethylene, polypropylene, an aramid resin, a polyamide, a polyimide, a polyamideimide, polyacrylonitrile, a polyacrylic acid, polyacrylic acid methyl ester, polyacrylic acid ethyl ester, polyacrylic acid hexyl ester, a polymethacrylic acid, polymethacrylic acid methyl ester, polymethacrylic acid ethyl ester, polymethacrylic acid hexyl ester, polyvinyl acetate, polyvinylpyrrolidone, a polyether, a polyethersulfone, hexafluoropolypropylene, styrene-butadiene rubber, and carboxymethyl cellulose. The binder may be a copolymer. Such a binder is, for example, a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, an acrylic acid, and hexadiene. A mixture of two or more selected from the above materials may be used.

To increase the electronic conductivity, at least one selected from the group consisting of the positive electrode 201 and the negative electrode 203 may contain a conductive additive.

Examples of the conductive additive include:
(i) graphites such as natural graphite and artificial graphite;
(ii) carbon blacks such as acetylene black and Ketjen black;
(iii) conductive fibers such as a carbon fiber and a metal fiber;
(iv) fluorinated carbon;
(v) metal powders such as an aluminum powder;
(vi) conductive whiskers such as a zinc oxide whisker and a potassium titanate whisker;
(vii) a conductive metal oxide such as titanium oxide; and
(viii) a conductive polymer compound such as a polyaniline compound, a polypyrrole compound, and a polythiophene compound. To reduce the cost, the conductive additive in (i) or (ii) above may be used.

Examples of the shape of the battery according to the second embodiment include a coin type, a cylindrical type, a prismatic type, a sheet type, a button type, a flat type, and a stacked type.

### Examples

The present disclosure will be described below in more detail with reference to examples and comparative examples.

### <<Example 1>>

### [Production of solid electrolyte material]

In a dry atmosphere with a dew point of -30°C or less (hereinafter referred to as a "dry atmosphere"), raw material powders of Li₂O, Li₂O₂, and ZrCl₄ were prepared in the molar ratio of Li₂O: Li₂O₂: ZrCl₄ = 1: 1:2. These raw material powders were mixed in a mortar to obtain a mixed powder. The obtained mixed powder was milled with a planetary ball mill at 600 rpm for 24 hours. Thus, a solid electrolyte material according to Example 1 was obtained which included a crystalline phase consisting of Li, Zr, O, and Cl.

The content of Li and the content of Zr in the solid electrolyte material according to Example 1 were measured by ICP emission spectroscopy with a high-frequency inductively coupled plasma emission spectrometer (iCAP7400 manufactured by Thermo Fisher Scientific K.K.). The content of Cl in the solid electrolyte material according to Example 1 was measured by ion chromatography with an ion chromatography device (ICS-2000 manufactured by Dionex Corporation). The content of O in the solid electrolyte material according to Example 1 was measured by an inert gas fusion-infrared absorption method with an oxygen analyzer (EMGA-930 manufactured by HORIBA, Ltd.). As a result, the solid electrolyte material according to Example 1 had a molar ratio Li/Zr of 2.0 and a molar ratio O/Cl of 0.25.

### [Evaluation of ionic conductivity]

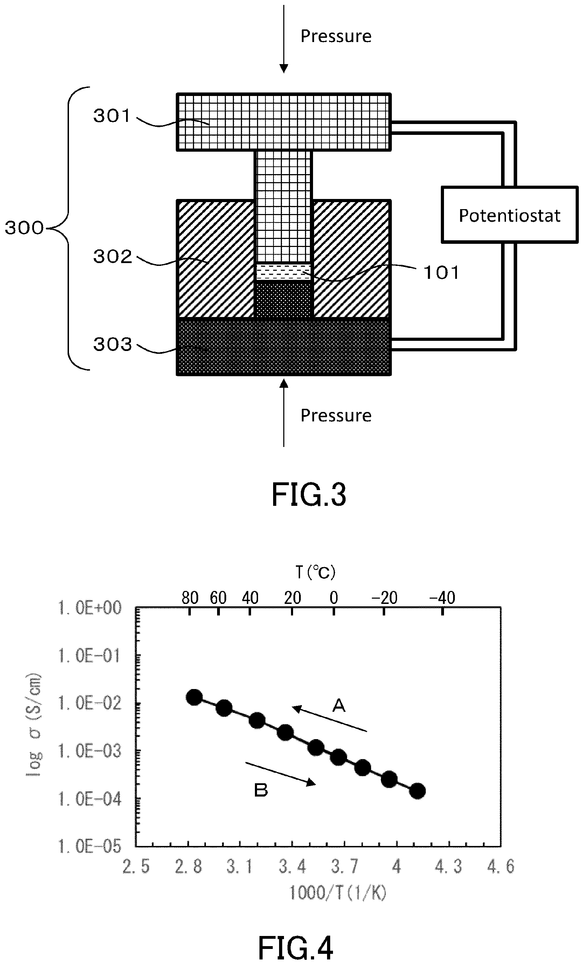

FIG. 3 shows a schematic diagram of a pressure-molding die 300 used to evaluate the ionic conductivity of the solid electrolyte material.

The pressure-molding die 300 included an upper punch 301, a die 302, and a lower punch 303. The die 302 was formed of polycarbonate, which has an insulating property. The upper punch 301 and the lower punch 303 were both formed of stainless steel, which is electronically conductive.

The pressure-molding die 300 shown in FIG. 3 was used to measure the ionic conductivity of the solid electrolyte material according to Example 1 by the following method.

In a dry atmosphere, the pressure-molding die 300 was filled with the powder of the solid electrolyte material according to Example 1 (i.e., a solid electrolyte material powder 101 in FIG. 3). Inside the pressure-molding die 300, a pressure of 300 MPa was applied to the solid electrolyte material according to Example 1 with the upper punch 301. Thus, an evaluation cell according to Example 1 was obtained.

While the pressure was applied to the evaluation cell, the upper punch 301 and the lower punch 303 were connected to a potentiostat (VersaSTAT4 manufactured by Princeton Applied Research) equipped with a frequency response analyzer. The upper punch 301 was connected to a working electrode and a potential measurement terminal. The lower punch 303 was connected to a counter electrode and a reference electrode. The ionic conductivity of the solid electrolyte material according to Example 1 was measured at room temperature by an electrochemical impedance measurement method. As a result, the ionic conductivity measured at 22°C was 2.6 mS/cm.

### [Evaluation of temperature stability of ionic conductivity]

FIG. 4 is a graph showing the temperature dependence of the ionic conductivity of the solid electrolyte material. The results shown in FIG. 4 were obtained from a measurement performed by the following method.

The evaluation cell according to Example 1 was placed in a thermostatic chamber. The ionic conductivity was measured in both a temperature increasing process and a temperature decreasing process within a range from -30°C to 80°C.

As shown in FIG. 4, the solid electrolyte material according to Example 1 maintained a high lithium-ion conductivity within the range from -30°C to 80°C. In FIG. 4, an arrow A indicates the temperature increasing process, and an arrow B indicates the temperature decreasing process.

### [X-ray diffraction]

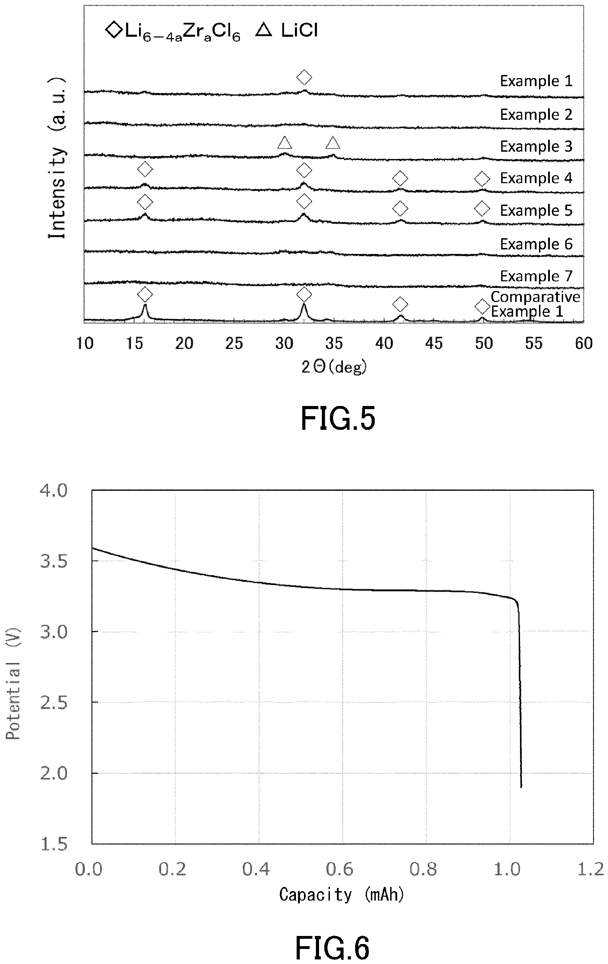

FIG. 5 is a graph showing the X-ray diffraction pattern of the solid electrolyte material according to Example 1. The results shown in FIG. 5 were obtained from a measurement performed by the following method.

In a dry atmosphere with a dew point of -45°C or less, the X-ray diffraction pattern of the solid electrolyte material according to Example 1 was measured with an X-ray diffractometer (MiniFlex 600 manufactured by Rigaku Corporation). The X-ray source used was Cu-Kα radiation (wavelengths of 1.5405 Å and 1.5444 Å).

In the X-ray diffraction pattern of the solid electrolyte material according to Example 1, only a peak attributed to Li₆₋₄ₐZrₐCl₆ (0 < a <1.5) was observed. That is, the solid electrolyte material according to Example 1 included an amorphous phase together with the crystalline phase.

As described above, the solid electrolyte material according to Example 1 included the crystalline phase and the amorphous phase.

### [Production of battery]

In an argon atmosphere with a dew point of -60°C or less, the solid electrolyte material according to Example 1 and LiCoO₂ were prepared in the volume ratio of the solid electrolyte material: LiCoO₂ = 30: 70. These materials were mixed in an agate mortar. Thus, a positive electrode mixture was obtained.

In an insulating cylinder having an inner diameter of 9.5 mm, the solid electrolyte material according to Example 1 (80 mg) and the positive electrode mixture (8.2 mg) were stacked to obtain a stack. A pressure of 360 MPa was applied to the stack to form a solid electrolyte layer and a positive electrode. The solid electrolyte layer had a thickness of 500 µm.

Next, a Li-In alloy (thickness: 200 µm) was stacked on the solid electrolyte layer. A pressure of 80 MPa was applied to the stack to form a negative electrode.

Next, stainless steel current collectors were attached to the positive electrode and the negative electrode, and current collector leads were attached to the current collectors.

Lastly, an insulating ferrule was used to block the inside of the insulating cylinder from the outside air atmosphere and hermetically seal the cylinder.

Thus, a battery according to Example 1 was obtained.

### [Charge and discharge test]

FIG. 6 is a graph showing the initial discharge characteristics of the battery according to Example 1. The horizontal axis represents the discharge capacity. The vertical axis represents the voltage. The results shown in FIG. 6 were obtained from a measurement performed by the following method.

The battery according to Example 1 was placed in a thermostatic chamber kept at 25°C.

The battery according to Example 1 was charged to the voltage of 3.6 V at a current value of 0.05 C rate (20 hour rate) with respect to the theoretical capacity of the battery. The battery according to Example 1 was then discharged to the voltage of 1.9 V at a current value of 0.05 C rate.

The result of the charge and discharge test was that the battery according to Example 1 had an initial discharge capacity of 1.03 mAh.

### <<Examples 2 to 7 and Comparative Example 1>>

### [Production of solid electrolyte material]

In Example 2, raw material powders of Li₂O, Li₂O₂, and ZrCl₄ were prepared in the molar ratio of Li₂O: Li₂O₂: ZrCl₄ = 0.6: 1.4: 2. The molar ratio Li/Zr was 2.0. The molar ratio O/Cl was 0.26.

In Example 3, raw material powders of Li₂O₂ and ZrCl₄ were prepared in the molar ratio of Li₂O₂: ZrCl₄ = 1: 1. The molar ratio Li/Zr was 2.0. The molar ratio O/Cl was 0.28.

In Example 4, raw material powders of Li₂O, Li₂O₂, and ZrCl₄ were prepared in the molar ratio of Li₂O: Li₂O₂: ZrCl₄ = 1.4: 0.6: 2. The molar ratio Li/Zr was 2.0. The molar ratio O/Cl was 0.24.

In Example 5, raw material powders of Li₂O and ZrCl₄ were prepared in the molar ratio of Li₂O: ZrCl₄ = 1: 1. The molar ratio Li/Zr was 2.0. The molar ratio O/Cl was 0.21.

In Example 6, raw material powders of Li₂O and ZrCl₄ were prepared in the molar ratio of Li₂O: ZrCl₄ = 1.5: 1. The molar ratio Li/Zr was 3.0. The molar ratio O/Cl was 0.25.

In Example 7, raw material powders of Li₂O₂ and ZrCl₄ were prepared in the molar ratio of Li₂O₂: ZrCl₄ = 1: 2. The molar ratio Li/Zr was 1.0. The molar ratio O/Cl was 0.21.

In Comparative Example 1, raw material powders of LiCl and ZrCl₄ were prepared in the molar ratio of LiCl: ZrCl₄ = 2:1. The molar ratio Li/Zr was 2.0. The molar ratio O/Cl was 0.00.

Solid electrolyte materials according to Examples 2 to 7 and Comparative Example 1 were obtained in a manner similar to that in Example 1 except for the above matters.

### [Evaluation of ionic conductivity]

The ionic conductivity was measured for the solid electrolyte materials according to Examples 2 to 7 and Comparative Example 1 in a manner similar to that in Example 1. The measurement results are shown in Table 1.

### [X-ray diffraction]

The X-ray diffraction pattern was measured for the solid electrolyte materials according to Examples 2 to 7 and Comparative Example 1 in a manner similar to that in Example 1. The measurement results are shown in FIG. 5.

As shown in FIG. 5, no peak was observed in the X-ray diffraction patterns of the solid electrolyte materials according to Examples 2, 6, and 7. In the X-ray diffraction pattern of the solid electrolyte material according to Example 3, only peaks attributed to LiCl were observed. In the X-ray diffraction patterns of the solid electrolyte materials according to Example 4, Example 5, and Comparative Example 1, only peaks attributed to Li₆₋₄ₐZrₐCl₆ were observed.

**[Table 1]**

| | Constituent element | Molar ratio Li/M | Molar ratio O/X | Ionic conductivity [mS/cm] |
|---|---|---|---|---|
| Example 1 | Li, Zr, O, Cl | 2.0 | 0.25 | 2.6 |
| Example 2 | | 2.0 | 0.26 | 2.2 |
| Example 3 | | 2.0 | 0.28 | 1.0 |
| Example 4 | | 2.0 | 0.24 | 1.4 |
| Example 5 | | 2.0 | 0.21 | 0.7 |
| Example 6 | | 3.0 | 0.25 | 2.0 |
| Example 7 | | 1.0 | 0.21 | 1.1 |
| Comparative Example 1 | Li, Zr, Cl | 2.0 | 0.00 | 0.4 |

### <<Discussion>>

As is clear from Table 1, the solid electrolyte materials according to Examples 1 to 7 have an ionic conductivity of 0.7 mS/cm or more near room temperature.

As is clear from comparing Examples 1, 2, 4, and 6 with Examples 3, 5, and 7, when the value of the molar ratio O/X was 0.24 or more and 0.26 or less, the solid electrolyte materials having a higher ionic conductivity were obtained.

The solid electrolyte material according to Example 1 maintained a high lithium-ion conductivity within an expected operating temperature range of the battery.

The battery according to Example 1 was charged and discharged at room temperature.

The solid electrolyte materials according to Examples 1 to 7 are free of sulfur, and accordingly generate no hydrogen sulfide.

As described above, according to the present disclosure, it is possible to enhance the lithium-ion conductivity of a solid electrolyte material including halogen. The solid electrolyte material according to the present disclosure generates no hydrogen sulfide, has a high lithium-ion conductivity, and is suitable for providing a battery having excellent charge and discharge characteristics.

### INDUSTRIAL APPLICABILITY

The battery of the present disclosure is utilized, for example, in an all-solid-state lithium-ion secondary battery.

## Claims

1. A solid electrolyte material comprising:
Li;
M;
O; and
X, wherein
the M is at least one selected from the group consisting of Ti, Zr, and Hf,
the X is at least one selected from the group consisting of Cl, Br, and I,
a molar ratio of the Li to the M is 1.0 or more and 3.0 or less, and
a molar ratio of the O to the X is 0.10 or more and 0.50 or less.

2. The solid electrolyte material according to claim 1, wherein
the M comprises Zr.

3. The solid electrolyte material according to claim 1 or 2, wherein
the X comprises Cl.

4. The solid electrolyte material according to any one of claims 1 to 3, wherein
the molar ratio of the O to the X is 0.20 or more and 0.30 or less.

5. The solid electrolyte material according to claim 4, wherein
the molar ratio of the O to the X is 0.24 or more and 0.26 or less.

6. A battery comprising:
a positive electrode;
a negative electrode; and
an electrolyte layer disposed between the positive electrode and the negative electrode, wherein
at least one selected from the group consisting of the positive electrode, the negative electrode, and the electrolyte layer comprises the solid electrolyte material according to any one of claims 1 to 5.
